# EUROPEAN PATENT APPLICATION

(11) **EP 2 950 283 A1**
(43) Date of publication of application: **02.12.2015**
(21) Application number: 15169532.7
(22) Date of filing: 28.05.2015
(51) Int. Cl.: G07F 17/12, G06Q 10/08

(54) **DELIVERY BOX SYSTEM AND METHOD FOR DELIVERING GROCERY PRODUCTS**

(30) Priority: 28.05.2014 FI 20145487
(71) Applicant: Norpe Oy, 06150n Porvoo (FI)
(72) Inventor: NORDSTRÖM, Dick, 06150 Porvoo (FI); RAUTAVUORI, Antti, 00610 Helsinki (FI)
(74) Representative: Berggren Oy Ab

(57) **Abstract**

A delivery box system (100) for delivering grocery products to users comprises a number of delivery boxes (101), which are arranged to box modules (102, 103, 104) and comprise a lockable door (105). In addition the system comprises a control unit (106) for controlling the operation of the lockable doors of the delivery boxes (101). The control unit is provided with door identifying information of the doors related to the products of a certain user and user identifying information of the user the products are to be delivered. The control unit (106) is configured to enable the actual opening of the lock (107) or access to the boxes in question and thereby enabling the actual opening of the lock of the door when said user identifying information is inputted into the control unit.

## Description

### TECHNICAL FIELD OF THE INVENTION

The invention relates to a delivery box system and method for delivering grocery products.

### BACKGROUND OF THE INVENTION

During recent times internet shopping and thereby shipment of goods for delivery to a customer, for example to a home or to an office has increased significantly. Typically, goods purchased via the internet are delivered to the customer by a courier or like. Alternatively the goods can be stored by the seller to a box system comprising plurality of boxes, where the products can be picked up by the customer. There a certain box is typically dedicated for the user for this single time and the identification information of the box as well as code for opening the box is delivered to the customer.

There are however some disadvantages relating to the known prior art, such as in many cases all of the products are stored in the same box, whereupon there is a problem for example relating to a cold chain and product safety. In other hand the energy saving or consumption is not optimal if a cold temperature box is used for products preserving at the room temperature. In addition there is a challenge that the doors of the cold or warm boxes are not left open and thus consumed energy for nothing.

### SUMMARY OF THE INVENTION

An object of the invention is to alleviate and eliminate the problems relating to the known prior art. Especially the object of the invention is to provide a delivery box system and method for delivering grocery products so that it allows service of plural customer at the same time or at least so that each of the customer has access only to desired delivery boxes , and minimizing a risk that unauthorized peoples can have an access to the boxes of the customer. In addition the object is to minimize the possibility to left doors of temperature controlled boxes open and thereby minimizing the energy consumption.

The object of the invention can be achieved by the features of independent claims.

The invention relates to a delivery box system according to claim 1. In addition the invention relates to a method for delivering grocery products according to a claim 14.

According to an embodiment of the invention a delivery box system for delivering grocery products to users comprises a number of delivery boxes, which are arranged to box modules. Advantageously each of the box comprises own lockable door. The system also comprises a control unit for controlling the operation of the lockable doors of the delivery boxes, where the control unit is provided with door identifying information of the doors related to the products of a certain user and user identifying information of the user the products are to be delivered. The control unit is configured to release the locking of the doors in question when said user identifying information is inputted into the control unit. The control unit is advantageously configured to enabling the actual opening of the lock or access to the boxes and not opening the lock as such. In addition, according to an advantageous embodiment only one door locking is released in turn. By this heat dissipation as well as other air transmission between the delivery box and the environment can be minimized.

The system or the doors of the system is/are advantageously provided with an interface for opening the actual locking, when the locking is first released. The interface is for example a button with possible signalling device, such as a coloured LED, indicating the correct door. Thus the releasing of the locking enables the actual opening of the door, whereupon the actual locking is configured to be opened via manipulating said interface related to the door in question after releasing the locking. This can be enabled within a certain time limit after which the locking is again unreleased. The manipulation of the interface may be implemented for example by pressing a button, or via capacitive, resistive, optical or other sensor sensing the pressing function or other manipulation of said interface. Now, if there are products in the plurality boxes for a certain customer, it can be ensured that only one box is opened at time. This allows the service of plural customers at the same time, since it can be ensured that all of the doors related to a certain customer are not opened simultaneously, and whereupon a risk that unauthorized peoples can have an access to the boxes of said one customer is eliminated.

In addition the locking of the doors may be configured to be released in a certain sequence so that the locking of the first door is configured to be released first and the locking of the second door is configured to be released only after said first door is opened and closed. By this the customer can be guided to a certain route, such as logistically the shortest route. The locking of the doors can also be configured to be released in a certain sequence so that the locking of the door of the box in module having the coldest temperature are configured to be opened first and the door of the box in module having the warmest or nearest to ambient temperature are configured to be opened last. Since the opening of the locking of only one door is released at the time, it can be ensured that the doors of the temperature controlled boxes are not left open and thus minimizing the energy consumption. Of course, according to an embodiment the doors especially those of delivery boxes of cooler or freezer modules may have automatic closing means that close the door after a certain time interval in order to efficient temperature control.

For guiding the customer to a right door the system may comprise the signalling device, as is described above, like a LED, but also other light devices and ways can be used, or sound or the like. Thus the system may be configured to serve also multiple users at the same time so that the doors for each user are provided with a locking opening interface and corresponding signalling device, like coloured LED, indicating the correct doors for each user by different signalling indication, for example by a certain colour or flashing type, sound or the like. In addition the system may also comprise a feedback device for giving feedback to the user, such as sound, light signal or vibrational feedback, for example if the wrong door is tried to be opened or if the previous door are left open. These indications can be indicated both the customer when picking up the products or to the seller who is filling the boxes.

Furthermore, according to an embodiment the first customer may be served first so that all the delivery boxes related to him are opened first (as described elsewhere in this document) and after he has opened the last box for him (so e.g. pressed the indicated button of the last box), the next customer is served and the first delivery box for the next user is indicated and opening allowed as described elsewhere in this document. The boxes for the next customer may be opened either when the first customer opens his last box (i.e. manipulates the interface for opening the actual locking, such as presses the button) or after the last box is closed again.

In addition according to an embodiment the system may also comprise a user profile register for storing user related parameters. These parameters may comprise for example limitations related to the user, age, length, possible mobile limitations, or preferences, or the like. Therefore the system may be configured to reserve predetermined boxes for users with a certain profile, for example reserve boxes at certain height or position, if the user has mobile limitations. Also VIP customers may be taking into account by reserving predetermined boxes in the view of location or the like for them.

When the service provider begins to place the products to be delivered to the system, the system may provide a proposal about the boxes to use. The system may be configured to provide the proposal for filling the boxes for example so that when the boxes of more than one module are needed the nearest free boxes of the two or more modules are chosen and proposed. Alternatively, when the service provider inputs the user related data (customer ID, for example) to the system, the system may check the user profile register and its parameters, such as whether the customer has mobile limitations or the like and thus whether the boxes at the certain location should be proposed. In addition the system may be configured to register utilization ratio of the delivery boxes and providing notification to a service provider about the maintenance need, as well as also a proposal for the delivery boxes to be used for the new delivery in order to achieve uniform utilization rate.

When the products to be delivered are ready in the boxes, the system is advantageously configured to inform the customer about the delivery via internet or mobile communication network message, such as by email, SMS, MMS or other messaging system known from prior art. The system also advantageously comprises a user interface operationally coupled with the control unit, such as a keyboard, RFID or NFC reader, wireless reader, like WLAN, Bluetooth, ZigBee or the like, optical reader, bio-identification reader, fingerprint sensor, iris scanner, face recognition device, barcode or 2D code reader or magnet card reader for inputting the user identifying information and/or password. The user interface can also be used for inputting data by the service provider (e.g. by inputting service provided ID and password or other identification data) for example related to the delivery boxes used for the products of said user in question. According to an embodiment the service provider may has own user interface tool, such as a tablet or computer or the like to manage the system, and the management of the system can be configured to happen via the control unit or via a server and the control unit directly. For example the service provider may control the maintenance data, temperatures and other operational functions.

According to an embodiment the system may also comprise an alcometer for determining a condition of the customer and thereby managing the release phase of the lock of a box comprising drugs or alcohol so that if the reading of the alcometer is exceeding a certain limit the locking of said box is not released. The alcohol measurement phase can be combined with inputting other user related data to said user interface, whereupon the identity (and age) of the customer is also determined at the same time.

According to an embodiment at the least one of the box modules of the system is a temperature controlled delivery box module. Advantageously the system is configured to provide first temperature range into at least first box module, and second temperature range into at least one second box module. In addition according to an embodiment the system is configured to determine temperatures of the delivery boxes and additionally also time elapsed after storing said grocery products to be delivered into the delivery boxes. Furthermore the system is configured to send an alarm to a service provider (e.g. vendor, dealer or manager) of the boxes, if the temperature of the delivery box or time elapsed exceeds a certain predetermined limit, whereupon the service provider may either add the time or cancel the order and remove the products, for example.

It is to be noted that the delivery box system described above may be a stand-alone unit, fixed system e.g. in the vicinity of shop, at the airport, gas station, or parking area, but alternatively it also may be a mobile system arranged on a vehicle, such as a motor powered system or towed system, whereupon it can be moved to a certain areas, where the customers can visit and bring the products.

The present invention offers advantages over the know prior art, such as it allows service of plural customers at the same time, and at the same time minimizing a risk that unauthorized peoples can have an access to the boxes of the customer, even if there are plurality of boxes dedicates to said one customer. In addition the current system of the invention minimizes the possibility to left the doors of the temperature controlled boxes open and thereby consuming energy for nothing. Moreover the delivery box system is very easy to use, because it guides the customer a certain route, such as logistically the shortest route, for picking-up the products ordered.

### BRIEF DESCRIPTION OF THE DRAWINGS

Next the invention will be described in greater detail with reference to exemplary embodiments in accordance with the accompanying drawings, in which:
- Figure 1: illustrates a principle of an exemplary delivery box system for delivering ordered products according to an advantageous embodiment of the invention, and
- Figure 2: illustrate exemplary of service provider interface tools according to an advantageous embodiment of the invention.

### DETAILED DESCRIPTION

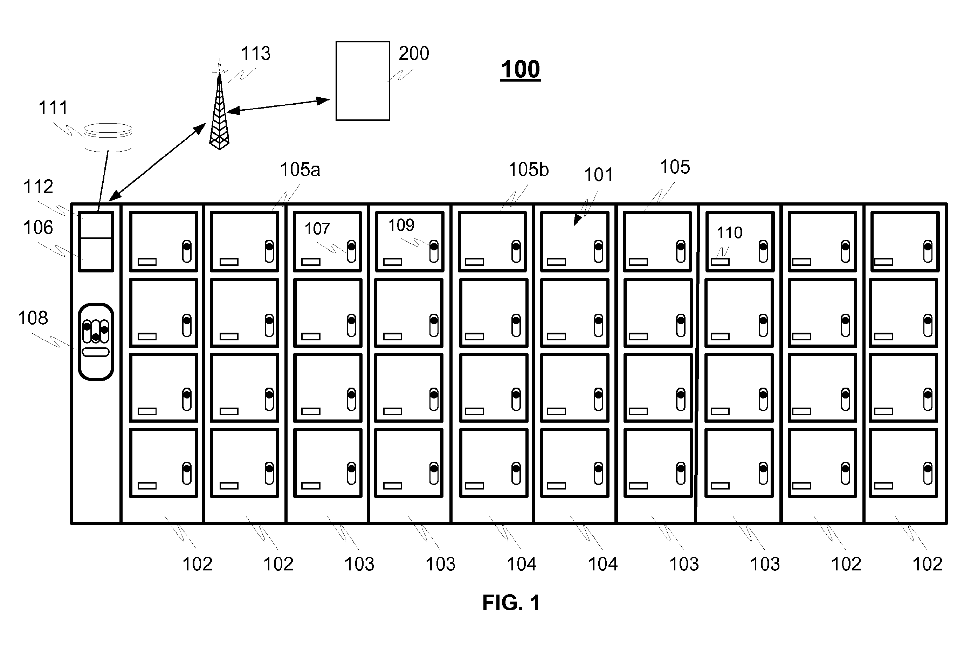

Figure 1 illustrates a principle of an exemplary delivery box system 100 for delivering ordered products according to an advantageous embodiment of the invention, where the system comprises a number of delivery boxes 101, which are arranged to box modules 102, 103, 104. The modules are advantageously temperature controlled delivery box modules so that the system is configured to provide first temperature range into at least first box module 102, second temperature range into at least one second box module 104. According to an embodiment the outermost module(s) 101 may be essentially at a room temperature, and the freezer modules 104 (the coldest temperature or according to an another embodiment the hottest temperature in comparison to ambient temperature) are advantageously located at the middle portion of the system due to the heat transfer, whereupon the energy efficiency of the system can be significantly increased.

Each of the boxes 101 comprises advantageously own lockable door 105. The system also comprises a control unit 106 for controlling the operation of the lockable doors 105 of the delivery boxes. In the usage the control unit is provided with door identifying information as well as user identifying information of the customer the products are to be delivered. The control unit is configured to release the locking 107 of the doors in question when said user identifying information is inputted into the control unit, advantageously via a user interface 108. The user interface 108 may comprise at least one of the following for inputting user related data, such as user identification data and information related to the order product, such as order number: a keyboard, RFID or NFC reader, wireless reader, like WLAN, Bluetooth, ZigBee or the like, optical reader, bio-identification reader, fingerprint sensor, iris scanner, face recognition device, barcode or 2D code reader or magnet card reader. In addition the user interface 108 may also comprise an alcometer.

The doors 101 comprise an interface 109 for opening the actual locking, such as a button 109 with LED light device, which can be pressed. When the locking 107 is first released, the actual opening of the door is thus enabled, and the actual locking is configured to be opened via manipulating said interface, such as pressing a LED button 109 related to the door in question. The control unit 106 advantageously controls the order of the doors to be opened and guides the user for the correct door for example by flashing said LED (signalling device) of the interface. Thus, when the LED flashed button is pressed (manipulated) the actual locking of the door is opened, whereafter the products can be taken away of said box. It is to be noted that the control unit may control plurality of boxes 101 of different customers at the same time by using different colours or other indication methods of said interface 109 for different customers. Advantageously locking of only one door is released for a time for a certain user. The signalling device may also be implemented with another technique as said LED light technique, such as sound, vibration or the like.

The control unit 106 may also manage the releasing of the doors in a certain sequence so that the locking of the first door is configured to be released first and the locking of the second door is configured to be released only after said first door is opened and closed, for example so that the locking of the first door 105a is released first and the locking of the second door 105b is released only after when the first door 105 is closed. The system may also comprise a feedback device 110 for giving feedback to the user, such as sound, light signal or vibrational feedback, for example if the wrong door is tried to be opened or if the previous door are left open.

The system may also comprise or the system may be in a data communication with a user profile register 111 (database), which is used for storing user related parameters. The system 100 may also comprise a data communication means 112, such as wireless or wired data communication means 112 for communicating with the data network systems 113, such as an internet or mobile communication network and thereby sending information to the customer about the delivery.

The system also advantageously comprises temperature meters in the modules for determining temperature of the modules or boxes, and also suitable cooling and refrigeration equipment (not shown in Figures). Additionally the system may also determine time elapsed after storing the grocery products. The system is also advantageously configured to send 112, 113 an alarm to a service provider, if the temperature of the delivery box or time elapsed exceeds a certain predetermined limit, whereupon the service provider may either add the time or cancel the order and remove the products, for example.

The overall idea of the invention is that when the grocery store has received information about an order of the customer including advantageously information also about the pick-up time e.g. from an internet ordering site or other ordering system, the ordered products are collected before the indicated pick-up time and placed in one or several delivery boxes 101 of the delivery box system 100 depending on the amount and type or ordered grocery products. After this the lockable doors of the delivery boxes are locked. The control unit 106 is provided with the information about the delivery boxes 101 corresponding to the order and corresponding order number or like indication of the order provided by the internet site or other ordering system also for the customer. When the customer comes to pick-up the order, he/she gives the order number or like information indicating the order by the control panel 108 to the control unit 106 which then provides access to corresponding delivery boxes 101 for the customer to pick-ups his/hers ordered grocery products from the delivery box/delivery boxes.

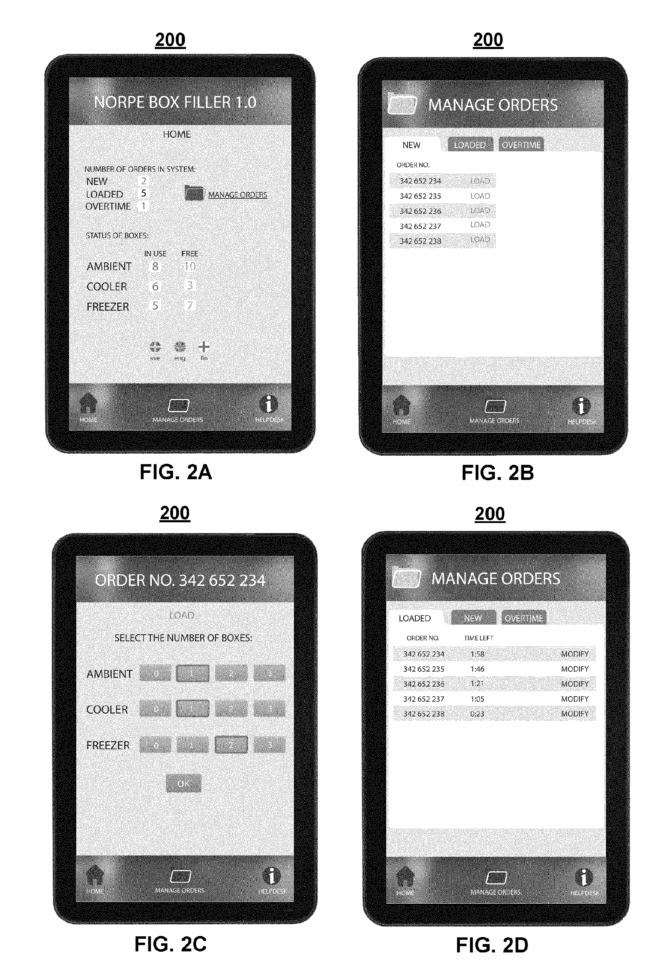

Figures 2a-2F illustrate exemplary of service provider interface tools 200 according to an advantageous embodiment of the invention for inputting data by the service provider for example related to the delivery boxes used for the products of said user in question. The service provider interface tool 200 may be implemented by a tablet, mobile station or computer or the like or according to an embodiment also the user interface 108 can be used for inputting data by the service provider, and the management of the system 100 can be configured to happen via the control unit 108 or via a server, communication system 113 and the control unit 108.

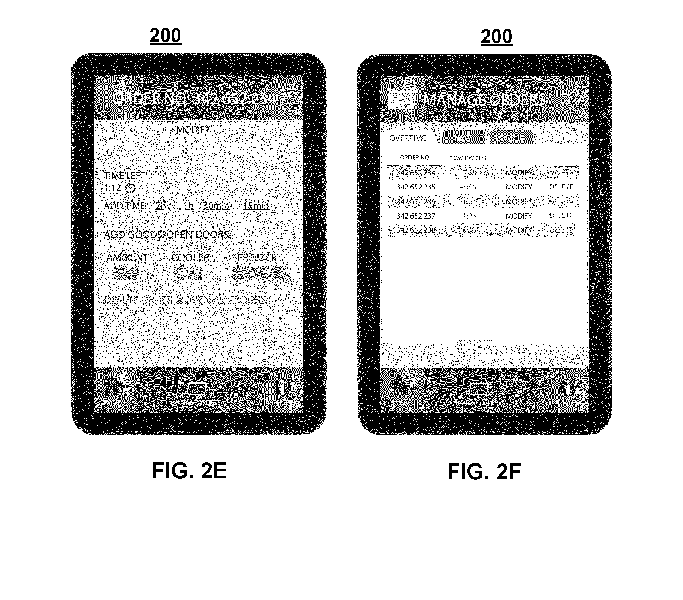

The service provider may for example manage and control the usage of different boxes of different modules via the interface tool (Figure 2A), manage orders (Figure 2B), select the number of boxes of different modules for the orders (Figure 2C) (or the system may propose a combination of boxes and display it to the service provider (Figure 2C), manage storage time of the orders (Figure 2D, E), and control and determine overall maintenance data, temperatures and other operational functions (Figure 2F).

The invention has been explained above with reference to the aforementioned embodiments, and several advantages of the invention have been demonstrated. It is clear that the invention is not only restricted to these embodiments, but comprises all possible embodiments within the spirit and scope of the inventive thought and the following patent claims.

## Claims

1. A delivery box system (100) for delivering grocery products to users, the system comprising a number of delivery boxes (101), which are arranged to box modules (102, 103, 104) and comprise a lockable door (105), **characterized in that** the system comprises:
- a control unit (106) for controlling the operation of the lockable doors of the delivery boxes (101),
wherein
- the control unit is provided with door identifying information of the doors related to the products of a certain user and user identifying information of the user the products are to be delivered, and
- the control unit is configured to release the locking (107) of the doors in question and thereby enabling the actual opening of the lock of the door when said user identifying information is inputted into the control unit.

2. A system of claim 1, wherein the doors (105) are additionally provided with a locking opening interface (109), whereupon the releasing of the locking enables the actual opening of the door (105) and the actual locking is configured to be opened via manipulating said interface (109) related to the door in question after releasing the locking.

3. A system of any of previous claims, wherein the locking of the doors is configured to be released in a certain sequence so that the locking of the first door (105a) is configured to be released first and the locking of the second door (105b) is configured to be released only after said first door (105a) is opened or closed again, and/or wherein the system is configured to provide feedback (110), such as sound, light signal, vibrational feedback if the wrong door is tried to opened or if the previous door is left open or for indicating the right door for the user.

4. A system of any of previous claims, wherein the locking of the doors is configured to be released in a certain sequence so that the locking of the door of the box of the module having the coldest temperature are configured to be opened first and the door of the box of the module having the warmest temperature or nearest to ambient temperature are configured to be opened last or vice versa.

5. A system of any of previous claims, wherein the system comprises a user profile register (111) for storing user related parameters comprising user limitation, length, possible mobile limitations, preferences, whereupon the system is configured to reserve predetermined boxes for users with a certain profile, for example reserve boxes at certain height or position.

6. A system of any of previous claims, wherein the system is configured to inform (112, 113) the user about the delivery via internet or mobile communication network message and the system comprises user interface 108 comprising keyboard, RFID or NFC reader, wireless reader, optical reader, bio-identification reader, barcode or 2D code reader or magnet card reader for inputting the user identifying information and/or password, and/or for inputting data by a service provider related to the delivery boxes used for the products of said user in question.

7. A system of any of previous claims, wherein the system comprises an alcometer for determining a condition of the user and thereby managing the release phase of the lock of a box comprising drugs or alcohol so that if the reading of the alcometer is exceeding a certain limit the locking of said box is not released.

8. A system of any of previous claims, wherein the system is configured to provide first temperature range into at least first box module (103), and second temperature range into at least one second box module (104), and wherein at the least one of the box modules is a temperature controlled delivery box module (102, 103, 104).

9. A system of any of previous claims, wherein the system is configured to determine temperatures of the delivery boxes and time elapsed after storing said grocery products to be delivered into the delivery boxes, and wherein the system is configured to send (112, 113) an alarm to a service provider (200), if the temperature of the delivery box or time elapsed exceeds a certain predetermined limit.

10. A system of any of previous claims, wherein the system is configured to register utilization ratio of the delivery boxes and providing notification (112, 113) to a service provider (200) about the maintenance need and/or a proposal for the delivery boxes to be used for new delivery.

11. A system of any of previous claims, wherein the system is configured to provide a proposal to a service provider (200) for filling the boxes so that when boxes of more than one module are needed the nearest free boxes of the two or more modules are chosen and proposed.

12. A system of any of previous claims, wherein the system is configured to serve multiple user at the same time so that the doors for each user are provided with a locking opening interface and corresponding signalling device indicating the correct doors for each user by different signalling indication, or wherein the first user is served first by allowing the opening of the delivery box door indicated for the first user and the door of the delivery box of the next user is allowed to be opened only when the last door for the first user is either opened or the interface for opening the actual locking is manipulated or after closing said last door.

13. A system of any of previous claims, wherein the system is a fixed system, or a mobile system arranged on a vehicle.

14. A method for delivering grocery products to users via delivery box system (100), the system comprising a number of delivery boxes (101), which are arranged to box modules (102, 103, 104) and comprise a lockable door (105), **characterized in that** the method comprises steps:
- controlling (106) the operation of the lockable doors of the delivery boxes (101),
wherein
- door identifying information of the doors (105) related to the products of a certain user and user identifying information of the user the products are to be delivered are provided, and
- the locking (107) of the doors in question is released when said user identifying information is inputted into the control unit (106).

15. A method of claim 14, wherein the doors are additionally provided with a locking opening interface (109), whereupon the releasing of the locking (107) enables the actual opening of the door (105) and the actual locking is configured to be opened via manipulating said interface (109) related to the door in question after releasing the locking.
